# EUROPEAN PATENT APPLICATION

(11) **EP 4 201 388 A1**
(43) Date of publication of application: **28.06.2023**
(21) Application number: 21931200.6
(22) Date of filing: 11.10.2021
(51) Int. Cl.: A61H 33/00, E04H 4/12

(54) **WATER FILTERING SYSTEM AND POOL BODY**

(30) Priority: 18.03.2021 CN 202120562141 U
(71) Applicant: Oriental Recreational Products (Shanghai) Co., Ltd, Fengxian, Shanghai 201402 (CN)
(72) Inventor: WANG, Zhiyue, Shanghai 201402 (CN)
(74) Representative: Zacco Sweden AB
(86) International application number: PCT/CN2021/123040
(87) International publication number: WO 2022/193625

(57) **Abstract**

The invention discloses a water filtration system, including: a circulation pump including a water inlet and a water outlet, the circulation pump being a low voltage direct current water pump; and a water passing pipeline connected at one end to the water inlet of the circulation pump and at the other end to a secondary water suction port, the secondary water suction port being used for sucking fluid stored in a water holding cavity. The water filtration system of the present invention has higher efficiency, higher pressure and a smaller volume than the traditional alternating current pump. The present application also provides a pool body.

## Description

### TECHNICAL FIELD

The invention relates to the technical field of pools, and in particular to a water filtration system and a pool body.

### BACKGROUND

Nowadays, leisure sports are enjoyed by an increasing number of people, and there are more and more market products. As a new leisure and entertainment product, the massage pool has gradually entered people's daily life. During the use of the massage pool, it is usually necessary to configure a circulation pump to filter the water. At present, the power source of the water filtration system of the massage pool product in the market is an alternating current water pump, which has large power consumption, low efficiency, a large volume, a large temporary space and high cost.

### SUMMARY

The present invention provides a water filtration system and a pool body, the circulation pump of the water filtration system is a low voltage direct current water pump, the filtration system has higher efficiency, higher pressure and a smaller volume than a conventional alternating current pump.

To address the above technical problem, embodiments of the present invention disclose a water filtration system, including: a circulation pump including a water inlet and a water outlet, the circulation pump being a low voltage direct current water pump; and a water passing pipeline connected at one end to the water inlet of the circulation pump and at the other end to a secondary water suction port, the secondary water suction port being used for sucking fluid stored in a water holding cavity.

With the above solution, the filtration system has higher efficiency, higher pressure and a smaller volume than a conventional alternating current pump.

According to another specific embodiment of the invention, the water filtration system further includes a heater including an inlet and an outlet, the inlet of the heater being connected to the water outlet of the circulation pump, and the fluid sucked by the secondary water suction port flowing through the heater and flowing out from the outlet of the heater.

According to another specific embodiment of the present invention, the water filtration system further includes a primary water suction port connected to the water inlet of the circulation pump, the primary water suction port being used for sucking the fluid stored in the water holding cavity.

According to another specific embodiment of the present invention, the fluid sucked by the primary water suction port and the fluid sucked by the secondary water suction port are combined and then flow into the water inlet of the circulation pump.

According to another specific embodiment of the invention, the circulation pump further includes:
a circulation bin, a housing of the circulation bin being provided with the water inlet and the water outlet, the water inlet and the water outlet communicating with an inner cavity of the circulation bin;
an impeller assembly located within the circulation bin, the impeller assembly being mounted on a rotating part extending in an axial direction, the rotating part being used for driving the impeller assembly to rotate in a circumferential direction under the drive of a driving part, the circumferential direction encircling the axial direction; wherein,
along the axial direction, a free end of the impeller assembly facing an axial housing wall of the housing of the circulation bin is disposed spaced from the axial housing wall.

According to another specific embodiment of the invention, the impeller assembly includes: a plurality of vanes disposed circumferentially around the rotating part, an axial end of the rotating part is provided with a convex portion disposed protruding from the plurality of vanes; an outer diameter of the convex portion gradually decreases in a direction towards the axial housing wall.

According to another specific embodiment of the invention, the impeller assembly further includes a chassis, an axial end of the vane is fixedly connected to the chassis, a projection of the chassis covers a projection of the plurality of vanes along the axial direction.

According to another specific embodiment of the invention, an extension of a tangent of the impeller assembly is able to extend to the water outlet.

According to another specific embodiment of the invention, the impeller assembly includes: a plurality of vanes disposed circumferentially around an axis of the rotating part and a chassis connected to the rotating part, an axial end of each of the vanes is fixedly connected to the chassis, a projection of the chassis covers a projection of the plurality of vanes in the axial direction; the plurality of vanes enclose an internally hollow structural member.

The present application also provides a pool body, including: the water filtration system as described above.

According to another specific embodiment of the invention, the pool body includes:
a pool inner wall including a side wall and a bottom wall which are connected, the side wall and the bottom wall of the pool inner wall forming a water holding cavity for storing the fluid; and
an additional chamber disposed on the pool inner wall, the water passing pipeline being disposed within the additional chamber.

According to another specific embodiment of the present invention, the additional chamber is provided with a bubble outlet communicating with the additional chamber and the water holding cavity.

According to another specific embodiment of the invention, the additional chamber is arranged at a junction of the side wall and the bottom wall of the pool inner wall.

According to another specific embodiment of the present invention, the pool body further includes a pool outer wall, the pool outer wall and the pool inner wall enclosing an air-filled chamber, the water filtration system being built into the air-filled chamber.

### BRIEF DESCRIPTION OF THE DRAWINGS

Fig. 1 illustrates a first perspective view of a circulation pump of an embodiment of the invention;
Fig. 2 illustrates a second perspective view of the circulation pump of an embodiment of the invention;
Fig. 3 illustrates a side view of the circulation pump of an embodiment of the invention;
Fig. 4 illustrates a first cross-section view of the circulation pump of an embodiment of the invention;
Fig. 5 illustrates a second cross-section view of the circulation pump of an embodiment of the invention;
Fig. 6 illustrates a first perspective view of an impeller assembly in the circulation pump of an embodiment of the invention;
Fig. 7 illustrates a second perspective view of the impeller assembly in the circulation pump of an embodiment of the invention;
Fig. 8 illustrates a side view of the impeller assembly in the circulation pump of an embodiment of the invention;
Fig. 9 illustrates a perspective view of a pool body of an embodiment of the invention;
Fig. 10 illustrates a first perspective view of a water filtration system in the pool body of an embodiment of the invention; and
Fig. 11 illustrates a second perspective view of the water filtration system in the pool body of an embodiment of the invention.

### DETAILED DESCRIPTION

Implementations of the invention will now be described with reference to specific embodiments, and additional advantages and functions of the invention will be readily apparent to those skilled in the art from the disclosure herein. While the description of this invention will be presented in connection with the preferred embodiments, this does not mean that the features of this invention are limited to the embodiments only. On the contrary, the invention is presented in connection with the embodiments for the purpose of covering other options or adaptations as may be extended based upon the claims of the present invention. Numerous specific details will be included in the following description to provide a thorough understanding of the invention. The invention may also be practiced without these details. Furthermore, some specific details will be omitted from the description in order to avoid confusing or obscuring the focus of the invention. It will be appreciated that the embodiments and features of the embodiments of the present invention may be combined with each other without conflict.

It should be noted that in the specification, similar reference numerals and letters represent similar items in the drawings below, so that once a certain item is defined in one drawing, the item does not need to be further defined and explained in the subsequent drawings.

In the description of the present embodiment, it should be noted that, the terms "inner", "bottom" and the like indicate an orientation or positional relationship based on the orientation or positional relationship shown in the drawings, or the orientation or positional relationship in which the invention product is conventionally disposed in use, and are merely for ease of description of the invention and simplification of the description, and are not intended to indicate or imply that the devices or elements referred to must have a particular orientation, be constructed and operate in a particular orientation, and therefore cannot be interpreted as limiting the invention.

The terms "first", "second", or the like are only used to distinguish the description, but cannot be understood as indicating or implying relative importance.

In the description of the embodiments, it should also be noted that terms "mounted", "connected" and "connection" should be understood in a broad sense unless otherwise specified and defined, for example, "connection" may be fixed connection or detachable connection or integrated connection, may be mechanical connection or electrical connection, may be direct connection or indirect connection through an intermediate medium, and may be internal connection of two elements. For those of ordinary skill in the art, the specific meanings of the above terms in the embodiments may be understood according to specific situations.

To make the objectives, technical solutions and advantages of the present invention more clear, the embodiments of the present invention will now be described in further detail in conjunction with the accompanying drawings.

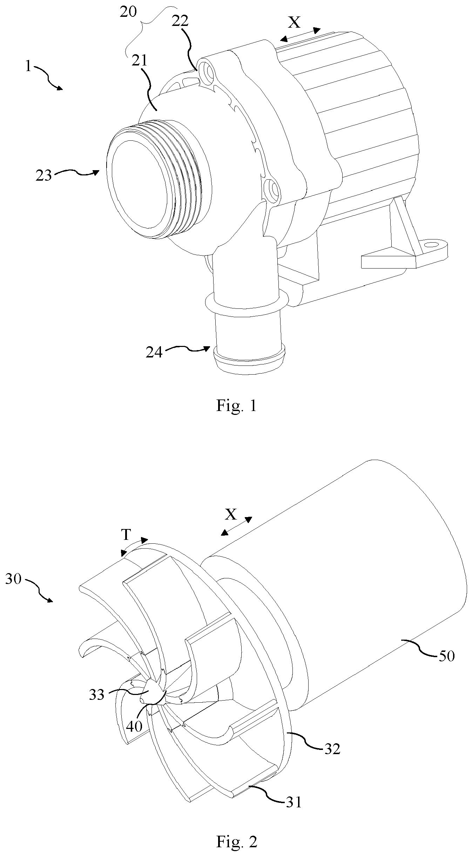

With reference to Figs. 1 to 4, the present invention provides a circulation pump 1 including a circulation bin 10, a housing 20 of the circulation bin 10 is provided with a water inlet 23 and a water outlet 24, the water inlet 23 and the water outlet 24 communicate with an inner cavity of the circulation bin 10. The water inlet 23 of the circulation pump 1 is connected with, for example, a water pipeline of a water pool, and the water enters the circulation bin 10 through the water inlet 23, can be filtered through a filter core (not shown), and then be discharged through the water outlet 24, resulting in filtration of the water. The filter core is for example arranged in the circulation bin 10 or at the water outlet 24. The specific type of the filter core is not limited, and the filter media of the filter cores of most circulation pumps 1 are made of folded non-woven or polyester fabric. The selection of the filter core may be set accordingly based on the filtered scene.

The circulation pump 1 of the present application further includes an impeller assembly 30 located inside the circulation bin 10. In this embodiment, the impeller assembly 30 is mounted on a rotating part 40, such as a rotating shaft, extending in an axial direction (the X direction shown in Figs. 1 to 4). The rotating part 40 is used for driving the impeller assembly 30 to rotate in a circumferential direction (the T direction shown in Fig. 2) under the drive of a driving part 50, the circumferential direction encircling the axial direction. The driving part 50 is, for example, a motor, and the rotating part 40 is connected to an output shaft (not shown) of the motor. Optionally, one axial end of the rotating part 40 is connected to the driving part 50 and the other axial end is connected to the impeller assembly 30. However, the type and location of the driving part 50 are not limited in this application. The driving part 50 satisfies the following condition: the driving part 50 is capable of driving the rotating part 40 to rotate so that the rotating part 40 drives the impeller assembly 30 to rotate in the circumferential direction.

In the present embodiment, the housing 20 of the circulation bin 10 includes an axial housing 21 disposed axially facing the impeller assembly 30 and a circumferential housing 22 connected to the axial housing 21 and disposed circumferentially.

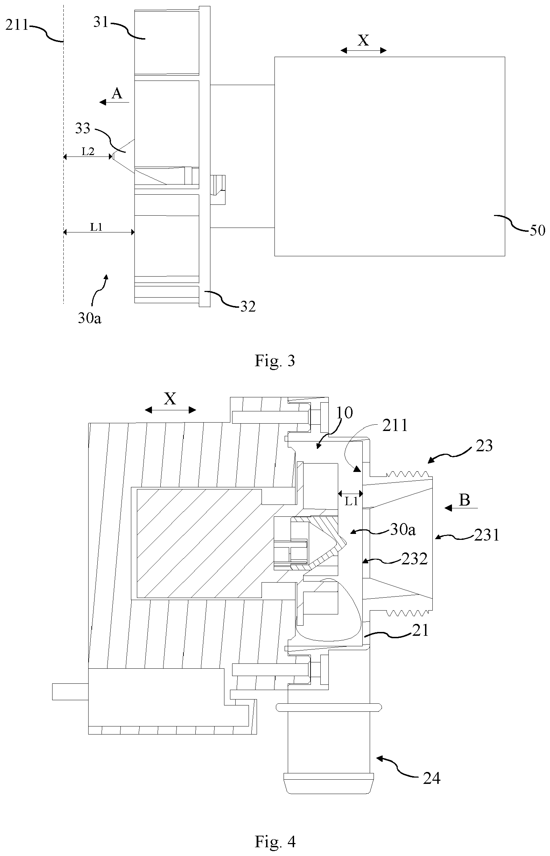

With continued reference to Figs. 1-4, herein, along the axial direction, the free end 30a of the impeller assembly 30 facing the axial housing wall 211 of the axial housing 21 of the housing 20 of the circulation bin 10 is spaced from the axial housing wall 211. That is, the impeller assembly 30 is axially fixed to the circulation pump 1 at one end, rather than axially fixed to the circulation pump 1 at both ends. The dotted line in Fig. 3 shows the axial housing wall 211 of the housing 20 of the circulation bin 10, and the axial spacing between the axial housing wall 211 and the free end 30a is shown by L1 and L2 in Fig. 3. L1 indicates the axial spacing between the axial ends of the plurality of vanes 31 described later and the axial housing wall 211 of the housing 20 of the circulation bin 10. L2 indicates the axial spacing between the axial end of the convex portion 33 described later and the axial housing wall 211 of the housing 20 of the circulation bin 10. That is, free end 30a of impeller assembly 30 of the present application is not in contact with the axial housing wall 211, but is suspended in the circulation bin 10.

As such, if foreign objects become wound on the impeller assembly 30 during rotation of the impeller assembly 30, the centrifugal force generated by the rotation of the impeller assembly 30 can throw away the foreign objects, and the risk of the impeller assembly 30 being wound with the foreign objects is greatly reduced. If the free end 30a of the impeller assembly 30 comes into contact with the axial housing wall 211, the foreign objects are prevented from being thrown out. Thus, during operation of the circulation pump 1 of the present invention, the foreign objects can be prevented from winding on the impeller assembly 30. The circulation pump 1 can work properly and the service life is prolonged.

As shown in Fig. 2, the impeller assembly 30 includes a plurality of vanes 31 disposed circumferentially around the rotating part 40, and an axial end of the rotating part 40 is provided with a convex portion 33 disposed protruding from the plurality of vanes 31. In the direction towards the axial housing wall 211 (the direction A shown in Fig. 3), the outer diameter of the convex potion 33 gradually decreases. As such, the water entering the circulation bin 10 is able to be diverted by the convex potion 33, similarly, the water is "squeezed out", so that the water can be better filtered and the foreign objects can be prevented from winding on the impeller assembly 30. In some possible embodiments, the convex potion 33 has a conical shape.

In some possible embodiments, as shown in Fig. 2, the vanes 31 are curved and can play the role of throwing out the foreign objects.

In some possible embodiments, as shown in Figs. 2 and 3, the impeller assembly 30 further includes a chassis 32 which is axially opposite and spaced from the axial housing wall 211 of the housing 20 of the circulation bin 10. An axial end of the vane 31 is fixedly connected to the chassis 32, along the axial direction, the projection of the chassis 32 covers the projection of the vanes 31. That is, the outer profile formed by the plurality of vanes 31 is covered by the outer profile of the chassis 32. In this embodiment, the chassis 32 has a circular shape and the outer profile of the chassis 32 has a circular shape and the outer profile formed by the plurality of vanes 31 has a circular shape. The diameter of the outer profile of the chassis 32 is then greater than the diameter of the outer profile formed by the plurality of vanes 31. As such, the foreign objects may be further prevented from winding on the impeller assembly 30. Because the chassis 32 can act as an axial blocking function, the foreign objects entering the circulation bin 10 are blocked at the chassis 32, and then the foreign objects are thrown out under the action of centrifugal force generated by the impeller assembly 30, thus further preventing the foreign objects from winding on the impeller assembly 30.

In some possible embodiments, as shown in Figs. 1 and 4, the water inlet 23 is arranged on the axial housing wall 211 of the housing 20 of the circulation bin 10. In this embodiment, along the axial direction, the water inlet 23 is located opposite and spaced from the convex portion 33. As such, after water has entered the circulation bin 10, the water entering the circulation bin 10 can be rapidly diverted by the convex potion 33 and better and faster filtration of the water and prevention of the foreign objects from winding on the impeller assembly 30 are achieved.

With reference to Fig. 4, the water inlet 23 includes, along the axial direction, a first opening 231 and a second opening 232, the second opening 232 being closer to the impeller assembly 30 compared to the first opening 231. That is, the second opening 232 is closer to the free end 30a of the impeller assembly 30 compared to the first opening 231. In the present application, the inner diameter of the first opening 231 is larger than the inner diameter of the second opening 232. In this way, the water can enter the circulation bin 10 at a greater speed, which is more advantageous in preventing the foreign objects from winding on the impeller assembly 30.

In some possible embodiments, the inner diameter of the water inlet 23 gradually decreases in the direction towards the impeller assembly 30 (the direction B shown in Fig. 4). Optionally, the cross section of the water inlet 23 has a ladder shape. Optionally, the cross section of the water inlet 23 is a circular arc transition surface.

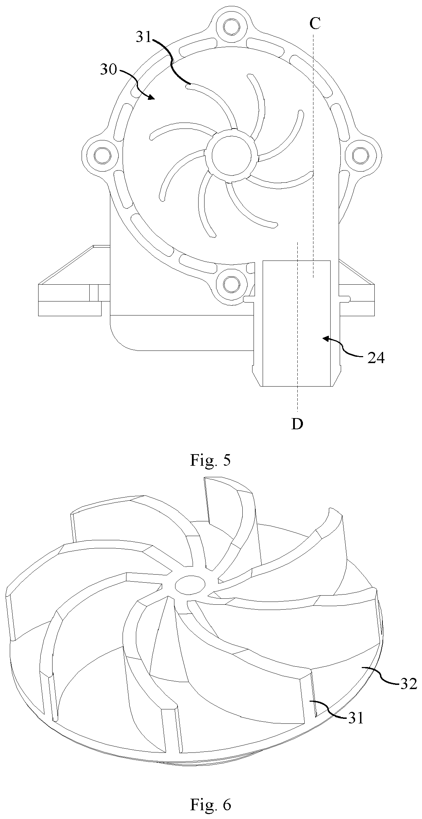

In some possible embodiments, as shown in Fig. 1, an extension of a tangent of the impeller assembly 30 (C shown in Fig. 5) can extend to the water outlet 24. That is, the extension direction of the tangent of the impeller assembly 30 coincides with the extension direction of the water outlet 24. That is, the extension direction of the tangent of the impeller assembly 30 is parallel with the central axis of the water outlet 24 (D shown in Fig. 5). In this way, the water in the circulation bin 10 is more easily discharged from the water outlet 24 under the action of the impeller assembly 30. Optionally, the water outlet 24 is arranged on the circumferential housing wall of the circumferential housing 22 of the housing 20 of the circulation bin 10.

In some possible embodiments, with reference to Fig. 6, the axial end of the rotating part 40 may not be provided with the convex potion 33. That is, axial ends of the plurality of vanes 31 are flush.

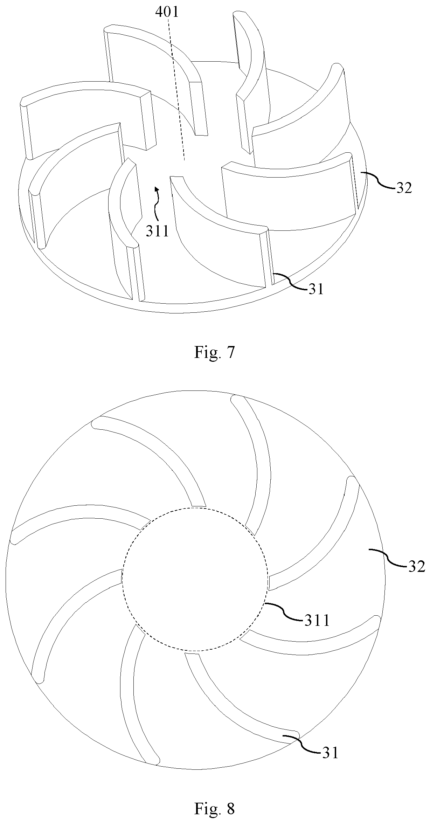

In some possible embodiments, with reference to Figs. 2, 7 and 8, the impeller assembly 30 includes a plurality of vanes 31 disposed circumferentially around the axis 401 of the rotating part 40 and a chassis 32, the chassis 32 is connected to the rotating part 40, an axial end of each of the vanes 31 is fixedly connected to the chassis 32, the projection of the chassis 32 covers the projection of the plurality of vanes 31 in the axial direction; the plurality of vanes 31 enclose an internally hollow structure member 311. That is, a difference from the impeller assembly of the above-described embodiment is that, in the present embodiment, the plurality of vanes 31 are not directly connected to the rotating part 40 but are directly connected to the chassis 32. The middle of the impeller assembly 30 is hollow. In this way, it is advantageous to prevent the foreign objects from winding on the impeller assembly, and the foreign objects in the circulation bin 10 are more easily thrown out under the action of centrifugal force.

The present invention also provides a pool including a pool body (not shown) and a water pipeline (not shown) connected to the pool body, the water pipeline being provided with the circulation pump 1 as described above. Filtration of water in or entering the pool body can be achieved and the safety factor of users using the pool is improved.

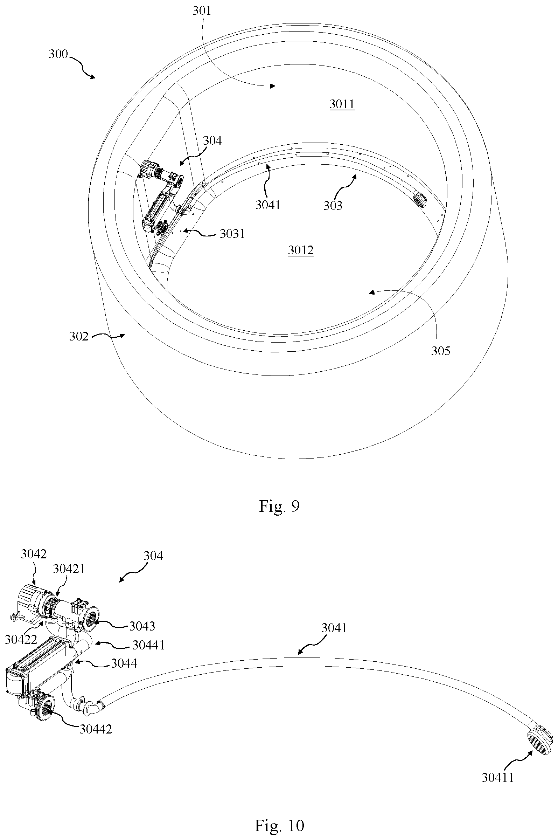

Referring to Figs. 9 to 11, the present application also provides a pool body 300, for example, a bathtub, and an MSPA product. The pool body 300 of the present application includes a pool inner wall 301, an additional chamber 303 and an additional pipeline 3041. The pool inner wall 301 includes a side wall 3011 and a bottom wall 3012 connected, the side wall 3011 and the bottom wall 3012 of the pool inner wall 301 forming a water holding cavity 305 for storing a fluid (e.g. water). Illustratively, the water holding cavity 305 is ring-shaped. An additional chamber 303 is arranged on the pool inner wall 301 and the additional pipeline 3041 is built into the additional chamber 303. The additional pipeline 3041, such as the later described water passing pipeline, is built into the additional chamber 303 of the pool body 300, thus saving the pool space.

Illustratively, the additional chamber 303 is arranged at the junction of the side wall 3011 and the bottom wall 3012 of the pool inner wall 301. That is, the additional chamber 303 is arranged at the outer edge of the bottom wall 3012 of the pool inner wall 301, or the additional chamber 303 is arranged at the outer edge of the side wall 3011 of the pool inner wall 301. In some possible embodiments, the additional chamber 303 is arranged on the side wall 3011 of the pool inner wall 301. Illustratively, the additional chamber 303 is ring-shaped.

In some possible embodiments, the additional chamber 303 is provided with a bubble outlet 3031 communicating with the additional chamber 303 and the water holding cavity 305. The pool body 300 of the present application further includes a bubble system (not shown) including at least an air pump motor (not shown), an air pump air passing pipeline (not shown), the aforementioned bubble outlet 3031 and an air inlet (not shown). The air pump motor is arranged within the hollow space (i.e. the air-filled chamber) formed by the pool inner wall 301 and the pool outer wall 302, and the air pump motor is connected to the additional chamber 303 via the air pump air passing pipeline.

Under the action of the bubble system, the gas flows into the additional chamber 303, is ejected through the bubble outlet 3031, thus forming a water flow with bubbles in the vicinity of the additional chamber 303. The water flow with bubbles has the effect of massaging the body when the user approaches the additional chamber 303.

Correspondingly, the additional chamber 303 described above is a bubble pocket and a non-closed chamber. In some possible embodiments, the additional chamber 303 is a closed chamber.

With continued reference to Figs. 9-11, the additional pipeline 3041 described above is a water passing pipeline of the water filtration system 304, the water passing pipeline is built into the additional chamber 303. In some possible embodiments, the additional pipeline 3041 is an air passing pipeline.

In some possible embodiments, the water filtration system 304 includes a circulation pump 3042 including a water inlet 30421 and a water outlet 30422. The circulation pump 3042 is a low-voltage direct current water pump. This water filtration system 304 has the advantages of high efficiency, high pressure, small volume, and simple installation, and prevents jamming, hair and other bath sundries compared with the traditional alternating current pump. The low-voltage direct current pump generally refers to a pump powered by direct current, also known as a micro direct current pump, for example, direct current 12V and direct current 24V.

The water inlet 30421 of the circulation pump 3042 is connected with one end of the water passing pipeline by a first water inlet pipeline 30423, and the other end of the water passing pipeline is connected with a secondary water suction port 30411, the secondary water suction port30411 being used for sucking the fluid stored in the water holding cavity 305.

In some possible embodiments, the water filtration system 304 further includes a heater 3044, for example, a PTC heater, including an inlet and an outlet 30442, the inlet of the heater 3044 being connected to the water outlet 30422 of the circulation pump 3042 via a second water inlet pipeline 30441, the fluid sucked by the secondary water suction port 30411 flowing through the heater 3044 and flowing back through the outlet 30442 of the heater 3044 to the water holding cavity 305.

Correspondingly, the water in the water holding cavity 305 of the pool body 300 flows into the circulation pump 3042 through the secondary water suction port 30411, then flows into the heater 3044 through the circulation pump 3042, and then flows back to the water holding cavity 305 through the outlet 30442 of the heater 3044, thereby realizing the circulating heating of the water in the water holding cavity 305 of the pool body 300.

Thus, the water passing pipeline of the water filtration system 304 of the present application passes through the additional chamber 303, e.g. a massage bubble pocket, of the pool inner wall 301. The design mode of the water passing pipeline can save the internal space of the pool, has a good heat preservation effect, is convenient for processing the pool body 300, reduces the risk of leakage of the pool body 300, and better seals the connecting part between the pool body 300 and the pipeline.

The pool body 300 of the present application also includes a pool outer wall 302, and the pool outer wall 302 and the pool inner wall 301 enclose an air-filled chamber within which a water filtration system 304 is housed. Illustratively, both the circulation pump 3042 and the heater 3044 of the water filtration system are built into the air-filled chamber, saving the interior space of the pool body 300.

The above-mentioned secondary water suction port 30411 is in sealed connection with the outer wall of the additional chamber 303 and communicates with the water holding cavity 305. The secondary water suction port 30411 is sealingly connected to the outer wall of the additional chamber 303 by, for example, welding, high frequency hot-melting, or the like.

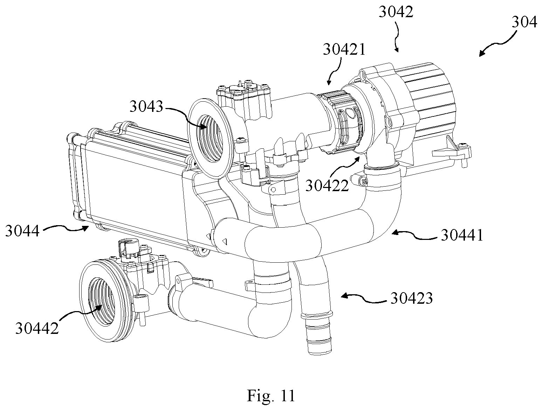

With continued reference to Figs. 9 and 11, the pool body 300 of the present application further includes a primary water suction port 3043 connected to the water inlet 30421 of the circulation pump 3042 for sucking the fluid stored by the water holding cavity 305. The fluid sucked by the primary water suction port 3043 and the fluid sucked by the secondary water suction port 30411 are combined and then flow into the water inlet 30421 of the circulation pump 3042. Correspondingly, the water filtration system 304 of the present application has two water suction ports (the primary water suction port 3043 and the secondary water suction port 30411), thus ensuring that the water inside the pool body 300 can be heated cyclically.

The above-mentioned primary water suction port 3043 is in sealed connection with the side wall 3011 of the pool inner wall 301 and communicates with the water holding cavity 305. The primary water suction port 3043 is sealingly connected to the side wall 3011 of the pool inner wall 301 by, for example, welding, high frequency hot melting, or the like.

In some possible implementations, the circulation pump 3042 of the present application has the same structure as the circulation pump 1 described in the previous embodiments (the circulation pump 1 shown in Figs. 1 to 8).

Although by reference to certain preferred embodiments of the invention, the invention has been illustrated and described, it will be apparent to those skilled in the art that the foregoing is a further detailed description of the invention in connection with specific embodiments, and the embodiments of the invention cannot be construed to be limited to these descriptions. Those skilled in the art may make various changes in form and detail, including making several simple deliveries or substitutions, without departing from the spirit and scope of the invention..

## Claims

1. A water filtration system, **characterized by** comprising:
a circulation pump comprising a water inlet and a water outlet, the circulation pump being a low voltage direct current water pump; and
a water passing pipeline connected at one end to the water inlet of the circulation pump and at the other end to a secondary water suction port, the secondary water suction port being used for sucking fluid stored in a water holding cavity.

2. The water filtration system according to claim 1, **characterized by** further comprising: a heater comprising an inlet and an outlet, the inlet of the heater being connected to the water outlet of the circulation pump, and the fluid sucked by the secondary water suction port flowing through the heater and flowing out from the outlet of the heater.

3. The water filtration system according to claim 1, **characterized by** further comprising: a primary water suction port connected to the water inlet of the circulation pump, the primary water suction port being used for sucking the fluid stored in the water holding cavity.

4. The water filtration system according to claim 3, **characterized in that** the fluid sucked by the primary water suction port and the fluid sucked by the secondary water suction port are combined and then flow into the water inlet of the circulation pump.

5. The water filtration system according to claim 1, **characterized in that** the circulation pump further comprises:
a circulation bin, a housing of the circulation bin being provided with the water inlet and the water outlet, the water inlet and the water outlet communicating with an inner cavity of the circulation bin;
an impeller assembly located within the circulation bin, the impeller assembly being mounted on a rotating part extending in an axial direction, the rotating part being used for driving the impeller assembly to rotate in a circumferential direction under the drive of a driving part, the circumferential direction encircling the axial direction; wherein,
along the axial direction, a free end of the impeller assembly facing an axial housing wall of the housing of the circulation bin is disposed spaced from the axial housing wall.

6. The water filtration system according to claim 5, **characterized in that** the impeller assembly comprises: a plurality of vanes disposed circumferentially around the rotating part, an axial end of the rotating part is provided with a convex portion disposed protruding from the plurality of vanes; an outer diameter of the convex portion gradually decreases in a direction towards the axial housing wall.

7. The water filtration system according to claim 6, **characterized in that** the impeller assembly further comprises a chassis, an axial end of the vane is fixedly connected to the chassis, a projection of the chassis covers a projection of the plurality of vanes along the axial direction.

8. The water filtration system according to claim 5, **characterized in that** an extension of a tangent of the impeller assembly is able to extend to the water outlet.

9. The water filtration system according to claim 5, **characterized in that** the impeller assembly comprises: a plurality of vanes disposed circumferentially around an axis of the rotating part and a chassis connected to the rotating part, an axial end of each of the vanes is fixedly connected to the chassis, a projection of the chassis covers a projection of the plurality of vanes in the axial direction; the plurality of vanes enclose an internally hollow structural member.

10. A pool body, **characterized by** comprising the water filtration system according to any one of claims 1 to 9.

11. The pool body according to claim 10, comprising:
a pool inner wall comprising a side wall and a bottom wall which are connected, the side wall and the bottom wall of the pool inner wall forming a water holding cavity for storing the fluid; and
an additional chamber disposed on the pool inner wall, the water passing pipeline being disposed within the additional chamber.

12. The pool body according to claim 11, **characterized in that** the additional chamber is provided with a bubble outlet communicating with the additional chamber and the water holding cavity.

13. The pool body according to claim 12, **characterized in that** the additional chamber is arranged at a junction of the side wall and the bottom wall of the pool inner wall.

14. The pool body according to claim 11, **characterized by** further comprising a pool outer wall, the pool outer wall and the pool inner wall enclosing an air-filled chamber, the water filtration system being built into the air-filled chamber.

## Amended claims

### Amended claims under Art. 19.1 PCT

1. A water filtration system, **characterized by** comprising:
a circulation pump comprising a water inlet and a water outlet, the circulation pump being a low voltage direct current water pump; and
a water passing pipeline connected at one end to the water inlet of the circulation pump and at the other end to a secondary water suction port, the secondary water suction port being used for sucking fluid stored in a water holding cavity;
wherein, the circulation pump further comprises:
a circulation bin, a housing of the circulation bin being provided with the water inlet and the water outlet, the water inlet and the water outlet communicating with an inner cavity of the circulation bin;
an impeller assembly located within the circulation bin, the impeller assembly being mounted on a rotating part extending in an axial direction, the rotating part being used for driving the impeller assembly to rotate in a circumferential direction under the drive of a driving part, the circumferential direction encircling the axial direction; wherein,
along the axial direction, a free end of the impeller assembly facing an axial housing wall of the housing of the circulation bin is disposed spaced from the axial housing wall.

2. The water filtration system according to claim 1, **characterized by** further comprising: a heater comprising an inlet and an outlet, the inlet of the heater being connected to the water outlet of the circulation pump, and the fluid sucked by the secondary water suction port flowing through the heater and flowing out from the outlet of the heater.

3. The water filtration system according to claim 1, **characterized by** further comprising: a primary water suction port connected to the water inlet of the circulation pump, the primary water suction port being used for sucking the fluid stored in the water holding cavity.

4. The water filtration system according to claim 3, **characterized in that** the fluid sucked by the primary water suction port and the fluid sucked by the secondary water suction port are combined and then flow into the water inlet of the circulation pump.

5. The water filtration system according to claim 1, **characterized in that** the impeller assembly comprises: a plurality of vanes disposed circumferentially around the rotating part, an axial end of the rotating part is provided with a convex portion disposed protruding from the plurality of vanes; an outer diameter of the convex portion gradually decreases in a direction towards the axial housing wall.

6. The water filtration system according to claim 5, **characterized in that** the impeller assembly further comprises a chassis, an axial end of the vane is fixedly connected to the chassis, a projection of the chassis covers a projection of the plurality of vanes along the axial direction.

7. The water filtration system according to claim 1, **characterized in that** an extension of a tangent of the impeller assembly is able to extend to the water outlet.

8. The water filtration system according to claim 1, **characterized in that** the impeller assembly comprises: a plurality of vanes disposed circumferentially around an axis of the rotating part and a chassis connected to the rotating part, an axial end of each of the vanes is fixedly connected to the chassis, a projection of the chassis covers a projection of the plurality of vanes in the axial direction; the plurality of vanes enclose an internally hollow structural member.

9. A pool body, **characterized by** comprising the water filtration system according to any one of claims 1 to 8.

10. The pool body according to claim 9, comprising:
a pool inner wall comprising a side wall and a bottom wall which are connected, the side wall and the bottom wall of the pool inner wall forming a water holding cavity for storing the fluid; and
an additional chamber disposed on the pool inner wall, the water passing pipeline being disposed within the additional chamber.

11. The pool body according to claim 10, **characterized in that** the additional chamber is provided with a bubble outlet communicating with the additional chamber and the water holding cavity.

12. The pool body according to claim 11, **characterized in that** the additional chamber is arranged at a junction of the side wall and the bottom wall of the pool inner wall.

13. The pool body according to claim 10, **characterized by** further comprising a pool outer wall, the pool outer wall and the pool inner wall enclosing an air-filled chamber, the water filtration system being built into the air-filled chamber.
